# EUROPÄISCHE PATENTANMELDUNG

(11) **EP 1 645 769 A2**
(43) Veröffentlichungstag der Anmeldung: **12.04.2006**
(21) Anmeldenummer: 05020199.5
(22) Anmeldetag: 16.09.2005
(51) Int. Cl.: F16D 65/14, F16D 23/14

(54) **Vorrichtung zur Betätigung einer Kupplung**

(30) Priorität: 07.10.2004 DE 102004048820
(71) Anmelder: LuK Lamellen und Kupplungsbau Beteiligungs KG, 77815 Bühl (DE)
(72) Erfinder: Rammhofer, Thomas, 77880 Sasbach (DE); Grabenstätter, Jan, 76593 Gernsbach (DE)

(57) **Zusammenfassung**

Es wird eine Vorrichtung vorgeschlagen zur Betätigung einer Kupplung über einen Betätigungshebel, wobei der Betätigungshebel auf einen Kupplungsgeberzylinder wirkt, über den die zum Ausrücken der Kupplung auf einen Kupplungsnehmerzylinder wirkende Ausrückkraft ansteuerbar ist, dadurch gekennzeichnet, dass zwischen dem Betätigungshebel und dem Kupplungsgeberzylinder ein Getriebe zur Erzeugung eines über den Betätigungsweg des Betätigungshebels veränderbaren Übersetzungsverhältnisses der Kraftübertragungsstrecke angeordnet ist.

## Beschreibung

Die vorliegende Erfindung betrifft eine Vorrichtung zur Betätigung einer Kupplung über einen Betätigungshebel, wobei der Betätigungshebel auf einen Kupplungsgeberzylinder wirkt, über den die zum Ausrücken der Kupplung auf einen Kupplungsnehmerzylinder wirkende Ausrückkraft ansteuerbar ist.

Im Triebstrang eines Kraftfahrzeugs, wie beispielsweise eines Personenkraftwagens oder dergleichen und auch bei Motorrädern findet sich eine Reibungskupplung, die sowohl als Anfahrelement, als auch als Schaltelement dient. Zur Betätigung der Kupplung durch den Fahrer des Fahrzeugs haben sich aus Gründen des Packaging und des Komforts hydraulisch betätigte Kupplungen durchgesetzt.

Bei einem solchen Kupplungsbetätigungssystem ist ein Betätigungshebel in der Form beispielsweise des vom Fahrer zu betätigenden Kupplungspedals, oder im Falle eines Motorrads, ein Kupplungshebel vorgesehen, wobei der Fahrer des Fahrzeugs das Kupplungspedal zum Öffnen der Kupplung - um eine entsprechende Ausrückkraft zum Öffnen der Kupplung aufzubauen - mit dem Fuß betätigt, bzw. beim Motorrad den Kupplungshebel mit der Hand in Richtung zum Lenkerhandgriff durchzieht, um auch hier eine Ausrückkraft zum Öffnen der Kupplung zu erzeugen.

Die Ausrückkraft wirkt dabei im Bereich des Kupplungsausrücklagers und führt am Kupplungspedal bzw. am Kupplungshebel über eine hydraulische und mechanische Übersetzung zu einer entsprechenden Betätigungskraft.

Um nun die ständig steigenden Drehmomente der Antriebsmotoren der genannten Kraftfahrzeuge sicher übertragen zu können, müssen die entsprechenden Reibungskräfte im Kupplungsaggregat und damit die Normalkräfte steigen. Die Anpresskräfte nehmen also zu. Damit steigen auch die zum Öffnen der Kupplung notwendigen Ausrückkräfte und damit wiederum die Betätigungskräfte am Kupplungspedal bzw. am Kupplungshebel.

Um dem Phänomen steigender Ausrückkräfte infolge beispielsweise Verschleißes an den Reibflächen entgegenzuwirken, sind bereits selbstnachstellende Kupplungen bekannt geworden. Diese verringern bei vergleichbarem Ausrückweg die Ausrückkräfte.

Bei Verwendung einer solchen selbstnachstellenden Kupplung steigt auf Grund des Verlaufs der Ausrückkraft, aufgetragen über dem Ausrückweg, die Betätigungskraft bzw. Pedal- oder Hebelkraft über dem Betätigungs- bzw. Pedalweg oder Hebelweg bis zu einem ein Maximum ausbildenden Wendepunkt an, um dann bei weiterer Kupplungsbetätigung durch den Fahrer deutlich abzufallen.

Bei diesem Abfall der Betätigungskraftkennlinie, aufgetragen über dem Betätigungsweg, dem so genannten Drop-off in dem Verlauf der Pedal- oder Hebelkraft, handelt es sich um eine limitierende Größe, da der Fahrer des Fahrzeugs einen zu starken Abfall als unkomfortabel empfindet, wenn der am Kupplungspedal, respektive dem Kupplungshebel vom Fahrer empfundene Widerstand nach dem Wendepunkt im Verlauf der Betätigungskraft als unkomfortabel empfunden wird, da die "Kupplung nach dem Kraftmaximum gleichsam widerstandslos nachgibt".

Es hat sich nun gezeigt, dass auch der Einsatz von Kompensationseinrichtungen, wie beispielsweise Zusatzfedern in der Kupplung oder einer Übertotpunktfeder am Pedal, nicht zur Realisierung gewünschter Betätigungskraftverläufe, aufgetragen über dem Hebelweg, führt.

Pedale zur Betätigung von fahrzeugrelevanten Funktionen, wie beispielsweise Fahr- oder Bremspedale sind bereits in vielfacher Weise bekannt geworden. Diese können aber das vorstehend genannte Problem nicht beseitigen.

So ist beispielsweise aus der DE 198 36 691 A1 ein Pedal für ein Kraftfahrzeug, insbesondere für elektrisch betätigbare Kraftfahrzeugbremsen bekannt geworden, mit dem eine Rückstellkraft einer elektrisch betätigten Kfz-Bremse mit progressiver Kennlinie simuliert werden soll. Zu diesem Zweck weist das Pedal eine Feder mit linearer Federkennlinie auf und eine zweite Feder, die über ein Betätigungselement angesteuert, eine progressiv steigende Federkennlinie erzeugt. Das vorstehend genannte Problem kann damit aber nicht beseitigt werden.

Eine Fahrpedaleinheit ist an Hand der EP 1 357 452 A1 bekannt geworden, mit der ein elektronisches Fahrpedal geschaffen werden soll, das mit zunehmender Betätigung einen vom Fahrer spürbaren zunehmenden Widerstand gegen die Betätigung des Fahrpedals schaffen soll. Auch mit diesem bekannten Pedal kann das vorstehend geschilderte Problem nicht beseitigt werden.

Ausgehend hiervon ist es nun Aufgabe der vorliegenden Erfindung, eine Vorrichtung zur Betätigung einer Kupplung über einen Betätigungshebel zu schaffen, die das Problem des Kraftabfalls zwischen dem Pedalkraftmaximum und dem sich hieran anschließenden Pedalkraftminimum verringert. Darüber hinaus soll die zu schaffende Vorrichtung so ausgebildet sein, dass der Kupplungsgeberzylinder weitestgehend unabhängig vom Betätigungshebel am Kraftfahrzeug angeordnet werden kann.

Die Erfindung weist zur Lösung dieser Aufgabe die Merkmale nach dem Anspruch 1 auf, wobei vorteilhafte Ausgestaltungen hiervon in den weiteren Ansprüchen beschrieben sind.

Die Erfindung schafft eine Vorrichtung zur Betätigung einer Kupplung über einen Betätigungshebel, wobei der Betätigungshebel auf einen Kupplungsgeberzylinder wirkt, über dem die zum Ausrücken der Kupplung auf einen wirkende Ausrückkraft ansteuerbar ist und zwischen dem Betätigungshebel und dem Kupplungsgeberzylinder ein Getriebe angeordnet ist zur Erzeugung eines über den Betätigungsweg des Betätigungshebel veränderbaren Übersetzungsverhältnisses der Kraftübertragungsstrecke.

Die Erfindung geht von der Erkenntnis aus, dass sich der Verlauf der Kennlinie der Kraft am Betätigungshebel über dem Betätigungsweg deutlich verbessern lässt, wenn im Bereich kleiner Kräfte ein kleines Übersetzungsverhältnis der Kraftübertragungsstrecke zwischen dem Betätigungshebel und dem Kupplungsnehmerzylinder realisiert werden kann, während im Bereich großer Betätigungskräfte, beispielsweise im Bereich des Pedalkraftmaximums oder Handhebelkraftmaximums, ein großes Übersetzungsverhältnis der Kraftübertragungsstrecke möglich ist. Um einen für den Fahrer des Kraftfahrzeugs als harmonisch und komfortabel empfundenen Pedalkraftverlauf oder Handhebelkraftverlauf zu erreichen, ist es von Vorteil, wenn sich das Übersetzungsverhältnis der Kraftübertragungsstrecke stufenlos verändern lässt.

Mit dem zwischen dem Betätigungshebel und dem Kupplungsgeberzylinder angeordneten Getriebe wird ein über den Betätigungsweg des Betätigungshebels veränderbares Übersetzungsverhältnis der Kraftübertragungsstrecke realisiert, sodass auch das eingangs geschilderte Problem des Drop-off-Effektes beseitigt werden kann, indem das Übersetzungsverhältnis beispielsweise so gewählt wird, dass das Pedalkraftmaximum, verglichen mit einem konstanten Übersetzungsverhältnis, abgesenkt wird, während das nach dem Pedalkraftmaximum folgende Pedalkraftminimum angehoben wird, sodass der Kraftabfall zwischen dem Pedalkraftmaximum und dem Pedalkraftminimum deutlich verringert werden kann.

Mittels des nach der Erfindung vorgesehenen Getriebes kann das Übersetzungsverhältnis der Kraftübertragungsstrecke derart verändert werden, dass das Verhältnis zwischen der im Bereich der maximalen Ausrückkraft und wieder fallenden Ausrückkraft am Betätigungshebel wirkenden Betätigungskraft sinkt. Auch kann das Übersetzungsverhältnis so verändert werden, dass die am Betätigungshebel wirkende Betätigungskraft in einem Bereich der ansteigenden Ausrückkraft größer ist als die Betätigungskraft bei konstantem Übersetzungsverhältnis.

Damit wird der Anforderung Rechnung getragen, dass der Pedalkraftverlauf bzw. Handhebelkraftverlauf, aufgetragen über dem Betätigungsweg, harmonischer verläuft, als es bei dem Kennlinienverlauf mit einem konstanten Übersetzungsverhältnis der Fall ist. Dadurch verläuft die Kennlinie flacher. Der Kennlinienverlauf besitzt dadurch kleinere maximale Gradienten.

Das zwischen dem Betätigungshebel und dem Kupplungsgeberzylinder vorgesehene Getriebe schafft darüber hinaus erhebliche Freiheitsgrade hinsichtlich der Anordnung des Kupplungsgeberzylinders am Fahrzeug, da der Kupplungsgeberzylinder derart über das Getriebe mit dem Betätigungshebel gekoppelt ist, dass die Lage des Kupplungsgeberzylinders relativ zum Betätigungshebel weitestgehend frei wählbar ist.

Nach den bisher bekannt gewordenen Kupplungsbetätigungssystemen verläuft die Längsachse des Kupplungsgeberzylinders weitestgehend im rechten Winkel zur Längsachse des Kupplungspedals, sodass der Kupplungsgeberzylinder bei diesen Pedalanlagen regelmäßig in den Fahrgastraum hineinragt und somit im Falle eines Unfalls eine erhebliche Verletzungsgefahr mit sich führt. Nach der vorliegenden Erfindung ist die Lage des Kupplungszylinders relativ zum Betätigungshebels weitestgehend frei wählbar, da das zwischen dem Betätigungshebel und dem Kupplungsgeberzylinder vorgesehene Getriebe dafür sorgt, dass der Kupplungsgeberzylinder beispielsweise vollständig in den Fahrgastraum integriert werden kann oder auch, sollte dies gewünscht sein, vollständig im Motorraum eines Kraftfahrzeugs angeordnet werden kann und somit ein für den Durchtritt des Kupplungsgeberzylinders durch die Spritzwand des Kraftfahrzeugs notwendiger Durchlass, der auch zu Dichtigkeitsproblemen Anlass geben kann, ebenfalls vermieden werden kann.

Das nach der Erfindung vorgesehene Getriebe kann von weitestgehend beliebiger Bauart sein. Es können beispielsweise Kurventriebe mit Kurvenscheiben und Nocken oder dergleichen oder auch Zahnradgetriebe vorgesehen werden. So ist es beispielsweise möglich, das Zahnprofil derartiger Zahnradgetriebe zum Erreichen gewünschter Verläufe des Übersetzungsverhältnisses zu modifizieren oder beispielsweise auch mittels des Vorsehens von Exzentrizitäten zwischen einzelnen Getriebebauteilen einen weitestgehend beliebigen Verlauf des Übersetzungsverhältnisses der Kraftübertragungsstrecke zu realisieren.

Lediglich beispielhaft sei daher an dieser Stelle genannt, dass das Getriebe ein Kurbeltrieb sein kann, der eine Kolbenstange des Kupplungsgeberzylinders mittels eines Schiebers oder einer Rolle schwenkbar mit dem Betätigungshebel koppelt. Bei einer solchen Ausführungsform erfährt die Kolbenstange aufgrund ihrer Anbindung an den Betätigungshebel über einen Schieber oder eine darüber hinaus reibungsvermindernde Rolle einen Schwenkwinkel von beispielsweise betragsmäßig 3 Grad, sodass sich damit der gewünschte Verlauf des Übersetzungsverhältnisses der Kraftübertragungsstrecke über dem Betätigungsweg des Betätigungshebels realisieren lässt.

Nach einer weiteren Ausführungsform ist es möglich, dass der Betätigungshebel selbst derart gekrümmt ausgebildet ist, dass der Schieber oder die Rolle entlang einer gekrümmten Bahnkurve verläuft. Damit kann ein weitestgehend beliebiger Verlauf des Übersetzungsverhältnisses erreicht werden.

Nach einer Weiterbildung der Erfindung kann das Getriebe auch ein Zahnradgetriebe sein, mit einem am Betätigungshebel vorgesehenen erstem Verzahnungsprofil, welches mit einem mit dem Kupplungsgeberzylinder gekoppelten zweiten Verzahnungsprofil derart kämmt, dass eine Schwenkbewegung des Betätigungshebels zu einer Beaufschlagung des Kupplungsgeberzylinders führt. Bei einer solchen Ausführungsform kann der Betätigungshebel bzw. ein Abschnitt davon aus einem Kunststoffwerkstoff ausgebildet sein, wobei der aus Kunststoff gefertigte Abschnitt auch bereits einstückig mit mindestens einem Element des Getriebes ausgebildet sein kann; also beispielsweise dem ersten Verzahnungsprofil, sodass sich darüber hinaus durch diese Ausbildung auch eine kostengünstige Fertigung realisieren lässt.

Die Tendenz steigender Drehmomente der Antriebsmotoren von Kraftfahrzeugen ist sowohl im Bereich einspuriger Fahrzeuge, also Motorräder, als auch im Bereich mehrspuriger Fahrzeuge, also beispielsweise Personenkraftwagen, Lastkraftwagen und dergleichen festzustellen, sodass die nach der Erfindung vorgesehene Vorrichtung zur Betätigung von Kupplungen im Triebstrang aller genannten Fahrzeuge eingesetzt werden kann.

Die erfindungsgemäße Vorrichtung ermöglicht es nun, dass der Kennlinienverlauf der Pedalkraft oder Handhebelkraft aufgetragen, über dem Pedalweg oder Handhebelweg, in weiten Bereichen an die Komfortanforderungen der Benutzer angepasst werden kann. Darüber hinaus schafft die erfindungsgemäße Vorrichtung wesentliche Vorteile hinsichtlich so genannter Packageprobleme, da das zwischen dem Betätigungshebel und dem Kupplungsgeberzylinder geschaltete Getriebe neue Freiheitsgrade für die Anordnung des Kupplungsgeberzylinders erbringt. Bei bekannten Pedalanlagen ist die Lage des Kupplungsgeberzylinders definiert mit einer im Wesentlichen waagerechten Ausrichtung, sodass der Kupplungsgeberzylinder durch die Stirnwand eines Kraftfahrzeugs in den Motorraum hervorragt. Das kann einerseits im Falle eines Unfalls nachteilig sein und darüber hinaus - da der Bremskraftverstärker regelmäßig nahe dem Bremspedal angeordnet ist - zu Platzproblemen mit dem Bremskraftverstärker führen. Auch herrschen im Motorraum von Kraftfahrzeugen Temperaturen von beispielsweise bis zu 120 °C vor, sodass der Kupplungsgeberzylinder auch hohen thermischen Belastungen unterliegt.

Die erfindungsgemäße Lösung macht es nunmehr möglich, dass der Kupplungsgeberzylinder in seiner Lage zum Betätigungshebel weitestgehend beliebig verschoben, verdreht und verlagert werden kann, sodass beispielsweise auch eine senkrechte Anordnung am so genannten Pedalbock möglich ist, der das Fahrpedal, das Bremspedal und das Kupplungsbetätigungspedal trägt. Da es nach der erfindungsgemäßen Lösung auch vorgesehen ist, dass zumindest Teile des Betätigungshebels auch aus einem Kunststoffwerkstoff gefertigt werden können, ergibt sich ein wesentlicher Kostenvorteil bei der Fertigung des Pedals, da in den Kunststoffwerkstoff auch bereits Verzahnungskomponenten des Getriebes oder andere Getriebebauteile integriert werden können.

Die Erfindung wird im Folgenden anhand der Zeichnung näher erläutert. Diese zeigt in:
- Fig. 1: eine schematische Darstellung einer Vorrichtung zur Betätigung einer Kupplung nach einer Ausführungsform gemäß der vorliegenden Erfindung;
- Fig. 2: drei Diagramme zur Erläuterung der Funktion der Vorrichtung nach der vorliegenden Erfindung;
- Fig. 3: eine schematische Darstellung einer weiteren Ausführungsform nach der vorliegenden Erfindung; und
- Fig. 4: ein Diagramm zur Erläuterung des Verlaufs der Pedalkraft aufgetragen über dem Pedalweg nach einer Vorrichtung gemäß der vorliegenden Erfindung und im Vergleich hierzu nach einer bekannten Vorrichtung.

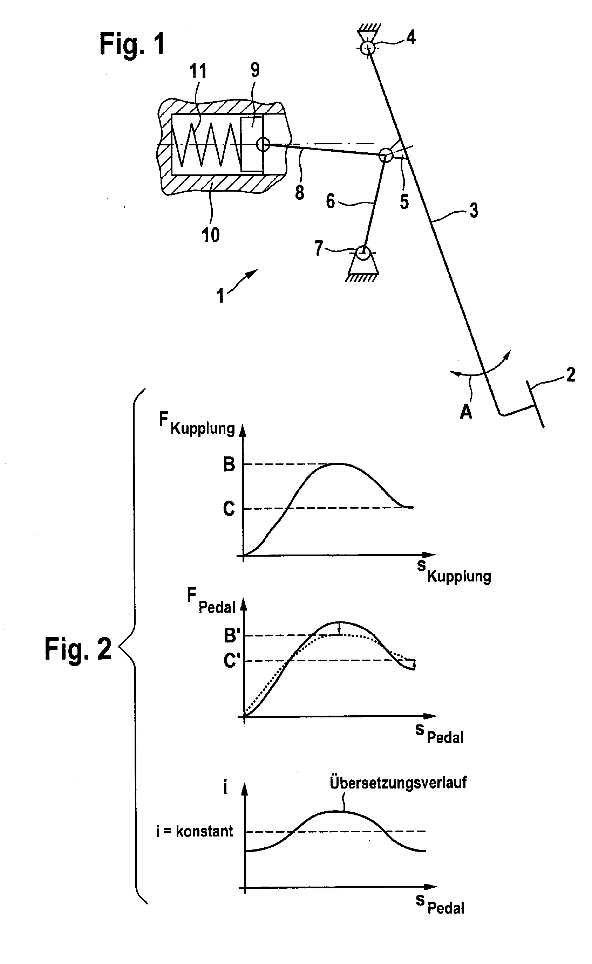

Fig. 1 zeigt in einer schematischen und stilisierten Darstellung eine Vorrichtung zur Betätigung einer Kupplung nach einer Ausführungsform gemäß der vorliegenden Erfindung.

Bei der in Fig. 1 dargestellten Vorrichtung 1 handelt es sich um eine Ausführungsform einer Vorrichtung zur Betätigung einer Kupplung nach der vorliegenden Erfindung für beispielsweise einen Personenkraftwagen. Ein nicht näher dargestellter Fahrer kann mit seinem Fuß auf das Pedal 2 treten und übt dabei eine Druckkraft auf das Pedal 2 aus, die als Reaktionskraft (Betätigungskraft) auftritt. Die Betätigung des Pedals 2 durch den Fahrer führt zu einer Schwenkbewegung eines mit dem Pedal 2 gekoppelten Betätigungshebels 3 um eine Lagerstelle 4 herum in Richtung des Pfeils A. An dem Betätigungshebel 3 ist ein Schieber 5 in Richtung der Längsachse des Betätigungshebels 3 um einen vorbestimmten Bereich verschiebbar angeordnet. Der Schieber 5 stützt sich dabei über eine Koppel 6 an einem Lager 7 ab. Darüber hinaus ist der Schieber 5 über eine weitere Koppel 8 mit einem schematisch dargestellten Kolben 9 eines Kupplungsgeberzylinders 10 verbunden. Am Kolben 9 ist eine Druckfeder 11 angebracht, die den Betätigungshebel 3 in seine unbetätigte Ausgangsstellung zurückverschieben kann. Der Schieber 5 kann auch durch eine reibungsmindernde Rolle ersetzt werden.

Wird der Betätigungshebel 3 durch eine Beaufschlagung des Pedals 2 in Richtung des Pfeils A verschwenkt, wird der Kolben 9 entgegen der Wirkung der Druckfeder 11 unter Herbeiführung einer geringfügigen Schwenkbewegung von etwa 3 Grad der Kolbenstange 8 verschoben und kann somit ein Hydraulikfluid aus dem Kupplungsgeberzylinder 10 heraus in Richtung eines nicht näher dargestellten Kupplungsnehmerzylinders verschieben.

Fig. 2 zeigt in dem obersten Diagramm einen Kennlinienverlauf der Ausrückkraft F_{Kupplung}, aufgetragen über dem Ausrückweg S_{Kupplung}. Wie ohne weiteres ersichtlich, weist die Ausrückkraftkennlinie nach seinem mit B gekennzeichnetem Ausrückkraftmaximum einen deutlichen Drop-off bis zum sich anschließenden Ausrückkraftminimum C auf.

Der im oberen Diagramm in Fig. 2 dargestellte Kennlinienverlauf der Ausrückkraft führt zu dem in dem mittleren Diagramm als durchgezogene Linie dargestellten Verlauf der Betätigungskraft am Pedal (Pedalkraft) F_{Pedal}, aufgetragen über dem Pedalweg s_{Pedal}.

Wie anhand der durchgezogenen Linie des Kennlinienverlaufs ersichtlich, folgt der Verlauf der Pedalkraft qualitativ dem Verlauf der Ausrückkraft nach dem oberen Diagramm der Fig. 2. Die durchgezogene Linie des mittleren Diagramms in Fig. 2 entspricht dabei dem Pedalkraftverlauf unter Verwendung einer bekannten Vorrichtung zur Betätigung einer Kupplung mit einem konstanten Übersetzungsverhältnis zwischen dem Betätigungshebel und dem Kupplungsgeberzylinders.

Ein solches konstantes Übersetzungsverhältnis ist in dem unteren Diagramm der Fig. 2 als gestrichelte Linie dargestellt. Dieses untere Diagramm in Fig. 2 zeigt als ausgezogene Linie auch den Verlauf des Übersetzungsverhältnisses der Kraftübertragungsstrecke zwischen dem Betätigungshebel 3 und dem nicht näher dargestellten Kupplungsnehmerzylinder. Wie anhand des grafischen Verlaufs der Übersetzung i, aufgetragen über den Pedalweg s_{Pedal} des unteren Diagramms der Fig. 2 ersichtlich, ist das Übersetzungsverhältnis im Bereich niedriger Ausrückkräfte der Kupplung kleiner als das konstante Übersetzungsverhältnis und führt daher zu einem Anstieg der Pedalkraft in diesem Bereich, was anhand des mittleren Diagramms in Fig. 2 anhand der gestrichelten Linie des Pedalkraftverlaufs unter Verwendung der erfindungsgemäßen Vorrichtung ersichtlich ist. Somit steigt das Übersetzungsverhältnis mit zunehmendem Pedalweg s_{Pedal} an, was zu einer Absenkung des Pedalkraftmaximums (siehe gestrichelte Linie im mittleren Diagramm der Fig. 2) führt. Daraufhin fällt das Übersetzungsverhältnis mit weiter zunehmendem Pedalweg s_{Pedal} wieder ab, sodass die Pedalkraft F_{Pedal} im Punkt C der Ausrückkraft höher ist als die Pedalkraft unter Verwendung eines konstanten Übersetzungsverhältnisses. Somit wurde durch die erfindungsgemäße Vorrichtung erreicht, dass der Drop-off-Effekt zwischen dem Pedalkraftmaximum (dem Punkt B im oberen Diagramm in Fig. 2 entsprechend) und dem sich hieran anschließenden Pedalkraftminimum (entspricht dem Punkt C im oberen Diagramm nach Fig. 2) abgesenkt wurde, da das Pedalkraftmaximum (B') verringert und das Pedalkraftminimum (C') nach dem Maximum hin ansteigt und somit der zwischen dem Punkt B und Punkt C im oberen Diagramm nach Fig. 1 in Erscheinung tretende Drop-off-Effekt der Pedalkraft F_{Pedal} verringert worden ist.

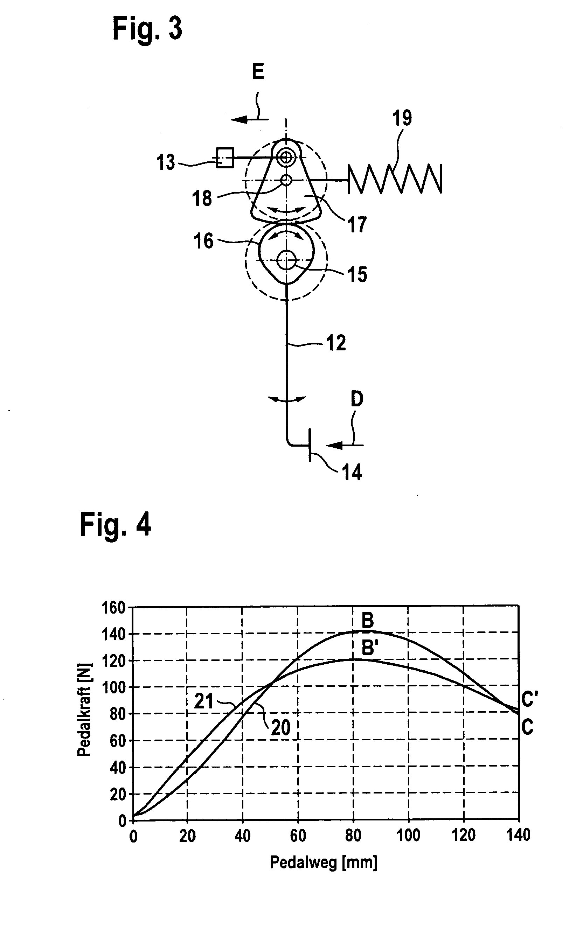

Fig. 3 zeigt in einer schematischen Darstellung ein Zahnradgetriebe, welches zwischen einem Betätigungshebel 12 und einem Kupplungsgeberzylinder 13 angeordnet ist. Auch hier handelt es sich um eine schematische und stilisierte Darstellung zur Erläuterung des Funktionsprinzips der Erfindung. Eine Betätigung des Pedals 14 in Richtung des Pfeils D führt zu einer Schwenkbewegung des Betätigungshebels 12 um das Lager 15. Ein am Betätigungshebel 12 einstückig angeordneter Verzahnungsabschnitt 16 kämmt mit einem Verzahnungsabschnitt 17, der um ein Lager 18 schwenkbar ist. Am Verzahnungsabschnitt 17 ist eine Feder 19 angebracht, die der Schwenkbewegung des Verzahnungsabschnitts 17 entgegenwirkt und ihn und damit den Betätigungshebel 12 in seine Ausgangsstellung zurück beaufschlagen kann. Die Betätigung des Kupplungspedals 14 in Richtung des Pfeils D führt letztlich zu einer Druckbeaufschlagung des Kupplungsgeberzylinders 13 in Richtung des Pfeils E, sodass wieder ein vorbestimmtes Volumen eines Hydraulikfluids aus dem Kupplungsgeberzylinder 13 in Richtung des nicht dargestellten Kupplungsnehmerzylinders verschoben werden kann.

Fig. 4 zeigt nun ein Diagramm zweier Kennlinien 20, 21 der Pedalkraft, aufgetragen über dem Pedalweg.

Die Kennlinie mit Bezugzeichen 20 entspricht dabei dem Verlauf der Pedalkraft, aufgetragen über dem Pedalweg einer bekannten Vorrichtung zur Betätigung einer Kupplung. Dem gegenüber entspricht die Kennlinie 21 dem Verlauf der Pedalkraft, aufgetragen über dem Pedalweg unter Verwendung einer erfindungsgemäßen Vorrichtung zur Betätigung einer Kupplung. In beiden Fällen wurde dabei die gleiche selbstnachstellende Kupplung von der bekannten Kupplungsbetätigungsvorrichtung bzw. der Kupplungsbetätigungsvorrichtung nach der Erfindung betätigt.

Wie ohne weiteres ersichtlich, sinkt das Pedalkraftmaximum von einem Wert von etwa 145 N auf einen Wert von etwa 120 N ab. Im rechten Bereich des Diagramms nach Fig. 4 ist noch zu erkennen, dass das dem Ausrückkraftmaximum B folgende Ausrückkraftminimum C der Kennlinie 21 oberhalb des Pedalkraftminimums der Kennlinie 20 liegt, sodass unter Verwendung der erfindungsgemäßen Vorrichtung auch das dem Pedalkraftmaximum B' folgende Pedalkraftminimum C' angehoben wird, sodass der so genannte Drop-off-Effekt, also der Kraftabfall zwischen dem Pedalkraftmaximum B' und dem Pedalkraftminimum C' bei der Vorrichtung nach der Erfindung deutlich verkleinert wird und somit eine insgesamt deutlich harmonischere Kennlinie des Pedalkraftverlaufs erreicht wird.

Die nach der Erfindung vorgesehene Vorrichtung zur Betätigung einer Kupplung zeichnet sich dadurch aus, dass damit einerseits dem Phänomen steigender Drop-off-Effekt bei steigenden Drehmomenten der Antriebsmotoren von Kraftfahrzeugen begegnet werden kann und darüber hinaus durch den wesentlichen Vorteil, dass die Anordnung des Kupplungsgeberzylinders örtlich getrennt von dem Betätigungshebel der Kupplung erfolgen kann. Das zwischen dem Betätigungshebel und dem Kupplungsgeberzylinders angeordnete Getriebe sorgt für ein veränderliches Übersetzungsverhältnis in der Kraftübertragungskette zwischen dem Pedal des Betätigungshebels und dem Kupplungsnehmerzylinder, sodass eine weitestgehend freie Kennlinie des Pedalkraftverlaufs, aufgetragen über dem Pedalweg, realisiert wird und darüber hinaus auch den ständig steigenden Anforderungen des Packaging im Kraftfahrzeugbau Rechnung getragen wird, da der Kupplungsgeberzylinder nunmehr unter Gewinnung neuer Freiheitsgrade bezüglich seiner Anordnung relativ zum Betätigungshebel am Kraftfahrzeug verbaut werden kann.

Obwohl vorstehend von einer hydraulischen Kraftübertragungsstrecke zwischen dem Betätigungshebel und der Kupplung ausgegangen worden ist, kann die Erfindung auch auf eine Kupplungsbetätigungsvorrichtung mit einer rein mechanischen Kraftübertragungsstrecke angewandt werden; also beispielsweise eine über einen Seilzug zwischen dem Betätigungshebel und der Kupplung arbeitende Kupplungsbetätigungsvorrichtung. Hier befindet sich dann das Getriebe zwischen dem Betätigungshebel und einer Einrichtung, an die der Seilzug zur Zugkrafteinleitung gekoppelt ist.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Vorrichtung
- 2: Pedal
- 3: Betätigungshebel
- 4: Lagerstelle
- 5: Schieber, Roller
- 6: Koppel
- 7: Lager
- 8: Koppel
- 9: Kolben
- 10: Kupplungsgeberzylinder
- 11: Druckfeder
- 12: Betätigungshebel
- 13: Kupplungsgeberzylinder
- 14: Pedal
- 15: Lager
- 16: Verzahnungsabschnitt
- 17: Verzahnungsabschnitt
- 18: Lager
- 19: Feder
- 20: Kennlinie
- 21: Kennlinie
- A: Pfeil
- B: Pedalkraftmaximum
- B': abgesenktes Pedalkraftmaximum
- C: Pedalkraftminimum
- C': angehobenes Pedalkraftminimum
- D: Pfeil
- E: Pfeil

## Patentansprüche

1. Vorrichtung zur Betätigung einer Kupplung über einen Betätigungshebel (3, 12), wobei der Betätigungshebel (3, 12) auf einen Kupplungsgeberzylinder (10, 13) wirkt, über den die zum Ausrücken der Kupplung auf einen Kupplungsnehmerzylinder wirkende Ausrückkraft ansteuerbar ist, **dadurch gekennzeichnet, dass** zwischen dem Betätigungshebel (3, 12) und dem Kupplungsgeberzylinder (10, 13) ein Getriebe zur Erzeugung eines über den Betätigungsweg des Betätigungshebels (3, 12) veränderbaren Übersetzungsverhältnisses der Kraftübertragungsstrecke angeordnet ist.

2. Vorrichtung nach Anspruch 1, **dadurch gekennzeichnet, dass** das Übersetzungsverhältnis gezielt veränderbar ist, dass das Verhältnis zwischen der im Bereich der maximalen Ausrückkraft (B) und wieder fallenden Ausrückkraft (C) am Betätigungshebel (3, 12) wirkenden Betätigungskraft weitestgehend frei veränderbar ist.

3. Vorrichtung nach Anspruch 1 oder 2, **dadurch gekennzeichnet, dass** das Übersetzungsverhältnis gezielt veränderbar ist, dass die am Betätigungshebel (3, 12) wirkende Betätigungskraft in einem Bereich der ansteigenden Ausrückkraft größer ist als die Betätigungskraft bei konstantem Übersetzungsverhältnis.

4. Vorrichtung nach Anspruch 1, **dadurch gekennzeichnet, dass** der Kupplungsgeberzylinder (10, 13) so über das Getriebe mit dem Betätigungshebel (3, 12) gekoppelt ist, dass die Lage des Kupplungsgeberzylinders (10, 13) relativ zum Betätigungshebel (3, 12) weitestgehend frei wählbar ist.

5. Vorrichtung nach Anspruch 1, **dadurch gekennzeichnet, dass** das Getriebe ein Kurbeltrieb (1) ist, der eine Kolbenstange (8) des Kupplungsgeberzylinders (10) mittels eines Schiebers (5) oder einer Rolle schwenkbar mit dem Betätigungshebel (3) koppelt.

6. Vorrichtung nach Anspruch 5, **dadurch gekennzeichnet, dass** der Betätigungshebel (3) so gekrümmt ausgebildet ist, dass der Schieber (5) oder die Rolle entlang einer gekrümmten Bahnkurve verläuft.

7. Vorrichtung nach Anspruch 1, **dadurch gekennzeichnet, dass** das Getriebe ein Zahnradgetriebe (16, 17) ist mit einem am Betätigungshebel (12) vorgesehenen ersten Verzahnungsprofil (16), welches mit einem mit dem Kupplungsgeberzylinder (13) gekoppelten zweiten Verzahnungsprofil (17) kämmt, so dass eine Schwenkbewegung des Betätigungshebels (12) zu einer Beaufschlagung des Kupplungsgeberzylinders (13) führt.

8. Vorrichtung nach Anspruch 1, **gekennzeichnet durch** eine Kraftkompensationseinrichtung (11, 19), die am Betätigungshebel (3) oder einem Getriebeelement (17) angreift.

9. Vorrichtung nach Anspruch 1, **dadurch gekennzeichnet, dass** der Betätigungshebel (3, 12) mindestens ein Abschnitt des Betätigungshebels (12) aus einem Kunststoffwerkstoff ausgebildet ist und dieser Abschnitt einstückig mit mindestens einem Element (16) des Getriebes ausgebildet ist.
